# EUROPEAN PATENT APPLICATION

(11) **EP 2 947 545 A1**
(43) Date of publication of application: **25.11.2015**
(21) Application number: 14305743.8
(22) Date of filing: 20.05.2014
(51) Int. Cl.: G06F 3/01, G06F 3/0481

(54) **System for implementing gaze translucency in a virtual scene**

(71) Applicant: ALCATEL LUCENT, 92100 Boulogne-Billancourt (FR)
(72) Inventor: Van Broeck, Sigurd, 2018 Antwerpen (BE); Stevens, Christoph, 2018 Antwerpen (BE)
(74) Representative: D'Halleweyn, Nele Veerle Trees Gertrudis

(57) **Abstract**

A system for implementing gaze translucency on a display configured for displaying to a user a virtual scene representation, said virtual scene representation comprising a number of virtual object representations of virtual objects; said system comprising a gaze capture module configured to capture gaze information; a gaze distance determination module configured to determine a distance between a virtual object of said virtual objects and a gaze distance origin, based on said gaze information; a gazed virtual object identification module configured to identify, for said user, a gazed virtual object of said virtual objects, based on said determined distance; a gaze translucency algorithm module configured to assign a modification command to one or more of said virtual objects, based on said identified gazed virtual object; and a virtual object modification module configured to modify said one or more virtual objects based on their assigned modification command.

## Description

### Field of the Invention

The present invention relates to the field of gaze translucency systems, and in particular to a system for implementing gaze translucency on a display configured for displaying to a user a virtual scene representation of a virtual scene, said virtual scene representation comprising a number of virtual object representations of virtual objects; a method for the same; a computer program for the same; a gaze distance determination module; and a virtual object modification module.

### Background

Gaze translucency is a useful element in many settings. The ability to capture information about things at which agents, such as human beings, are looking, is useful to direct or steer attention to something (gently or strongly). A typical social setting for gaze translucency is for instance communicating in group with three or more people. The gaze information is useful for the person talking, in order to direct his attention to a specific person and to get feedback from that person; for the listeners, in order to understand who the speaker is talking to and whom (or what) the other listeners are looking at; and for turn-taking. As such, people can see each other (visibility), they know that other people can see them (awareness), and they know that the other people know that they can see them (accountability). The latter is referred to as social translucency.

In face-to-face conversations, the gaze of an individual is easy to detect. However, in today's multiparty video calls (Computer Mediated Communications), all participants are looking almost directly into their small monitor at the (mosaic of) other people whereby gaze direction is almost completely lost. As a result, each individual feels as if every other participant is looking directly at him. All participants therefore feel that they get much more attention than they would normally attract or deserve in the given social setting. The social translucency is completely lost.

In other settings, gaze translucency is useful to determine whether or not participants are looking at whatever they should be looking. For example, in a classroom setting in which a virtual scene is displayed containing virtual objects, one of which should be paid attention to, the teacher would like to ensure that the students are looking at that virtual object of that virtual scene that is the subject of teaching. In other settings, such as automotive, e-health or gaming settings, it may be useful to capture information about what things an agent is looking at, and to support or redirect that agent's attention as necessary. A car driver would profit, for example, from having his attention directed to important road signs or potentially dangerous elements on the road. A driver or pilot may find it useful to have her attention gently directed to a flashing warning sign on an intelligent instrument panel.

Typical solutions for these problems present a system to re-introduce gaze information to interested parties, implementing gaze translucency, preferably in a natural way. However, these systems do not present any easily extendable architecture, in that it is difficult for third parties to extend or replace (part of) the functionality for those systems.

### Summary

It is an object of embodiments of the present invention to provide a technical solution to make it easier for third parties to extend or replace (part of) the functionality of gaze translucency systems, for instance in order to create new virtual objects for inclusion in virtual scenes for such systems.

In the present specification, 'gaze translucency' is taken to mean 'the ability to capture information about what agents are looking at'. An 'agent' can be a human being, an animal or an inanimate object, or more generally any entity that is capable of 'gazing', including virtual objects and virtual cameras. For human beings and animals, 'gazing' is well-defined. For inanimate objects and virtual objects, the skilled person will understand that 'gazing' must be interpreted technically according to the specific setting.

According to an aspect of the invention, there is provided a system for implementing gaze translucency on a display configured for displaying to a user a virtual scene representation of a virtual scene, said virtual scene representation comprising a number of virtual object representations of virtual objects. The system comprises: a gaze capture module configured to capture gaze information of said user, said gaze information comprising gaze coordinates representing a position on said display at which said user is looking; a gaze distance determination module configured to determine a distance between a virtual object of said virtual objects and a gaze distance origin, based on said captured gaze information; a gazed virtual object identification module configured to identify, for said user, a gazed virtual object of said virtual objects, based on said determined distance; a gaze translucency algorithm module configured to assign a modification command to one or more of said virtual objects, based on said identified gazed virtual object; and a virtual object modification module configured to modify said one or more virtual objects based on their assigned modification command.

In this manner, the described system has a modular design architecture. This system provides a technical solution to allow easy extension and/or replacement of (part of) the functionality of a gaze translucency system, and thus solves the above formulated problem.

The skilled person will understand that the modular structure of the system embodiment allows distributed operation, since one module can be situated at a first processing unit and another module at another, different processing unit, for instance to provide gaze translucency to multiple users at different locations, or to spread system load. The skilled person is well aware of how to provide the communication that is necessary for such distributed operation. It will also be appreciated that some system embodiments may comprise more than one module of a same kind, such that several modules of the same kind operate simultaneously, for instance for efficiency, ease of implementation, failsafe redundancy, or privacy. For example, a system embodiment according to the present invention may comprise one or more such gaze capture modules; one or more such gaze distance determination modules; one or more such gazed virtual object identification modules; one or more such gaze translucency algorithm modules; and one or more such virtual object modification modules. The skilled person will understand that, for instance, a first gaze distance determination module as well as a second gaze distance determination module may be situated at a single processing unit, or even at two separate, different processing units. The skilled person is well aware of how to implement such distributed operation.

Further, the skilled person will understand that some of the comprised modules may be combined in a single module - *e.g.* though functionally distinct, a gaze distance determination module and a virtual object modification module may be combined.

Moreover, the modular architecture advantageously allows third parties to easily create new virtual objects to extend or replace part of the system's functionality. If a third party wishes to create a new kind of virtual object (*e.g.* a new type of user in a user conference, a new type of traffic sign, etc.) said third party need only implement the required modules to facilitate inclusion in a system embodiment. As a specific example, in order to be identified as a gazed virtual object, a virtual object of a third party need only implement a mechanism to allow determining its distance from the gaze distance origin. This means that third parties can easily create their own new virtual objects that implement the gaze distance determination module of the system and that can therefore potentially be identified as being gazed at by the user. Also, as a specific example, this modular architecture makes it possible to easily modify one or more virtual objects in the context of gaze translucency, regardless of their representation. For instance, it is possible to create a new (type of) virtual object that implements the virtual object modification module.

Further, the modular architecture makes it possible to extend or replace any module of the system embodiment, as long as the interface functionality to the other modules is kept. This advantageously allows third parties to easily create new virtual objects that can be included in virtual scenes, while maintaining gaze translucency.

In the present specification, a virtual scene is taken to mean an aspect of a virtual world as it is experienced by a user. Said virtual world may be purely virtual (*e.g*. as in video games) or may be an augmented virtual reality by virtually representing real-world entities (*e.g*. as in an enhanced automotive use setting, where real-world road indications or potential dangers are represented on a wind screen, for instance to highlight their importance). The virtual world may comprise virtual objects, including any of the following: human beings, animals, or inanimate objects, such as trees, motor parts or road signs. The skilled person will understand that these virtual objects may gaze back at the user (or at a virtual object associated with said user). In the above described setting of a driver having her attention drawn to a flashing warning sign on an intelligent instrument panel, the skilled person will appreciate that this is possible by having virtual objects represented on said panel gaze at the driver. The driver is aware that such intelligent panels can see what she is gazing at, and, as soon as the driver gazes back at the panel, the accountability is established.
Said aspect of a virtual world can be called a virtual scene, typically as viewed by a virtual camera. This virtual scene may comprise some (or all) of the virtual objects of said virtual world. The virtual scene may be displayed on a display as a virtual scene representation, comprising virtual object representations of those virtual objects of said virtual scene that are in view of the virtual camera (*e.g.* inside a view frustum) for its corresponding user.

The skilled person will understand that virtual objects can, for example, be created by a third party as a (new) kind of entity for use in virtual scenes (*e.g.* a new type of person in the form of program code for a person class). The skilled person will also understand that such an entity may comprise data, such as its position and size for use in such a virtual scene (so that a user looking at a display will perceive a virtual scene in which said virtual objects appear to exist logically), as well as logic for how it should be represented (*e.g.* as a representation on said display, to be perceived by said user in a certain manner) and/or for other purposes, such as logic for calculations related to the virtual object itself. In other words, it encapsulates data and logic relevant to itself. The skilled person will further understand that said data and logic may themselves be further encapsulated separately.

Further, it will be appreciated by the skilled person that a 'display' may refer to any means for visualizing (*i.e.* provide perception of) a virtual scene, including *e.g.* a computer monitor, a television screen, a smartphone display, virtual reality goggles, a holographic projection (for holograms), a wall projection, a projection on an eye or retina, a wind screen projection, a helmet visor display, a contact lens display, a bionic eye, a brain-computer interface, etc.

The skilled person will furthermore understand that, if two or more users are looking at a single display, the system embodiment presented here can include the use of a multi-view display (*i.e.* a display that displays multiple view simultaneously, either on geometrically separate parts of the display, or using filtering technology to superpose several images in such a way that each user sees only one such separate image). It is an advantage of this embodiment that multiple users can experience gaze translucency on one multi-view display displaying several virtual scene representations separately or superposed on each other. The skilled person will further understand that this may require mapping a gaze to a user, and will be capable of implementing a solution for this (*e.g*. using face recognition for a user, or by having the user wear a color-coded recognition object, etc.)

In a preferred embodiment, said virtual scene is a three-dimensional (3D) scene; said gaze distance origin corresponds to a virtual camera position of a virtual camera of said virtual scene; and said at least one gaze distance determination module is configured to determine said distance by calculating a distance between said virtual object and said gaze distance origin. The skilled person is aware of how to calculate distances in a 3D space.
It is an advantage of this embodiment that the distance calculation can thus be 'delegated' to a module that is specialized therefor, such as a static library, a dynamic library, function exposed by a platform, or a 3D virtual object itself, allowing for easy extensibility. This latter delegation is in accordance with the encapsulation of logic pertaining to the virtual object itself. In this encapsulation context, the virtual object can be considered as an object instance of a class, having a dependent gaze distance determination module to encapsulate the responsibility and effort of its distance determination.

In a further developed embodiment, said at least one gaze distance determination module is configured to calculate said distance by extending a gaze ray into said virtual scene from said gaze distance origin through said gaze coordinates and finding, within a view frustum of said virtual camera, a smallest distance of a plurality of intersections of said gaze ray with said virtual object and said gaze distance origin. The skilled person is well aware of possible approaches to calculate such intersections and corresponding distances.
It is an advantage of this embodiment that said gaze ray constitutes a computationally easily tractable representation of the user's gaze, thereby allowing an efficient determination of each virtual object's distance to said gaze distance origin. If multiple intersections exist, the nearest intersection (*i*.*e.* the intersection with the shortest distance to said gaze distance origin) will typically represent the part or side of the virtual object that a user is looking at - intersections farther away (corresponding to farther distances) are typically outside of a user's gaze.
The skilled person will understand that a gaze distance determination module can determine said gaze distance based on knowledge of the gaze distance origin (however this has been determined) and gaze information comprising the gaze coordinates, since by extending a gaze ray from said gaze distance origin through said gaze coordinates, the user's gaze direction is taken into account. Specifically in the context of using a virtual camera for a virtual view, it is possible that some or even all of the virtual objects of the virtual scene are out of view of the virtual camera, as defined by said virtual camera's view frustum - as is well-known to those skilled in the art. For instance, virtual objects may be outside of the sides of said view frustum (to the sides as seen from the virtual camera), behind the view frustum's far plane or even in front of the view frustum's near plane. The skilled person will understand that although it is theoretically possible to consider every virtual object when determining distances or, more generally, performing operations on large numbers of virtual objects, it will be much more efficient to only consider those virtual objects that lie (wholly and even partially) within said view frustum, using for instance View Frustum Culling (VFC) techniques - as is well-known to those skilled in the art. The skilled person will understand that in the context of embodiments of the present invention, in order to only consider for distance determination those virtual objects that have virtual object representations on the display, a form of VFC or a comparable technique may be applied. Nevertheless, this exclusion is not strictly necessary to the correct operation of said embodiments; it can simply be included for efficiency.

In another embodiment, said gaze distance determination module is configured to determine that said distance is essentially infinite if no intersection of said gaze ray with said virtual object is found.
The skilled person will understand that 'essentially infinite' can be taken to mean that the distance is thusly represented so as to certainly (or very nearly certainly) be greater than the values the skilled person would expect to be determined for the distances of virtual objects that may be gazed at by the user, thereby ensuring that a virtual object whose distance is determined to be 'essentially infinite' is not taken to be a gazed virtual object. By corollary, if said distance is essentially finite, said user is in all likelihood gazing at said virtual object, or rather in said virtual object's general direction and not necessarily directly at it, as there may be other virtual objects in between the virtual camera and said virtual object.

In an embodiment, said gazed virtual object identification module is configured to identify said gazed virtual object by selecting the virtual object of said virtual objects that has a minimum distance.

The skilled person will understand that selecting the virtual object with a minimum distance from amongst the number of virtual objects will allow to identify the virtual object at which the user is gazing, since (typically) no two virtual objects will have an (essentially) equal distance. In this context, 'essentially equal' can be taken to mean exactly equal or equal to within some margin, *i.e.* differing from each other no more than a certain threshold. In case two or more virtual objects are found to have an (essentially) equal minimum distance, the gazed virtual object identification module may have a choice mechanism to choose between the two or more virtual objects, or may be configured to identify that more than one of the two or more virtual objects are gazed virtual objects.
It is an advantage of this embodiment that this selection criterion of a minimum distance is easily and transparently applicable.

In a particular embodiment, said system further comprises at least one head tracking means configured for dynamically determining said virtual camera position by capturing head tracking information. The skilled person will understand that such head tracking information represents at least a position of said user's head, and optionally an orientation of said user's head.
It is an advantage of this embodiment that the virtual camera position is thereby clearly defined, and situated at a position that dynamically corresponds to the user's head. Moreover, the skilled person will appreciate that embodiments according to the present invention are applicable regardless of how said virtual camera position is determined; in other words, even if there is parallax repositioning of the virtual scene representation in accordance with a repositioning of the user's head, the embodiments are still fully applicable.

In yet another embodiment, said virtual camera position is located at a pre-determined distance away from a pre-determined position of the display.
It is an advantage of this embodiment that the virtual camera position is thereby clearly defined, and situated at a position that by default is typically well-known to most users, for instance in front of the display, at, say, 70 centimetres away from the centre of the display.

In another embodiment, said at least one gaze distance determination module is configured to determine said distance taking into account at least one bounding box of said virtual object, preferably at least one axis-aligned minimum bounding box.
It is an advantage of this embodiment that taking into account such a bounding box ensures that the distance better corresponds to the user's expectations of said virtual object, and/or that the computational complexity of determining the distance is decreased.

In a particular embodiment, said virtual scene is a two-dimensional (2D) scene, and said gaze distance determination module is configured to determine said distance by calculating a 2D distance between said virtual object and said gaze distance origin. The skilled person will understand that many approaches can be used to calculate such 2D distances, including but not limited to Euclidean and rectilinear distance calculation approaches. The skilled person will appreciate that a distance calculation approach may therefrom be chosen taking into account complexity and speed of calculation and/or scene-dependent considerations. Also, the skilled person understands that in a 2D environment, there is no depth (no Z-direction); therefore, the view frustum is flat, and the gaze distance origin coincides with the gaze coordinates.
In a related embodiment, said gaze distance origin lies on a plane formed by said display, at said gaze coordinates. It will be appreciated that this embodiment may entail that the direction of the gaze is then preferably considered to be perpendicular to said display and into said virtual scene.
It is an advantage of this embodiment that the gaze distance origin is thereby clearly defined, and can thus be easily used for determining distances.

According to another aspect of the invention, there is provided a method for implementing gaze translucency on a display configured for displaying to a user a virtual scene representation of a virtual scene, said virtual scene comprising a number of virtual object representations of virtual objects. The method comprises: capturing gaze information of said user, said gaze information comprising gaze coordinates representing a position on said display at which said user is looking; determining a distance between a virtual object of said virtual objects and a gaze distance origin, based on said captured gaze information; identifying, for said user, a gazed virtual object of said virtual objects, based on said determined distance; assigning a modification command to one or more of said virtual objects, based on said identified gazed virtual objects; and modifying said one or more virtual objects, based on their assigned modification command.

The skilled person will appreciate that the technical features and advantages of the hereinabove described system embodiments are, *mutatis mutandis,* also applicable to the method embodiments.

In an embodiment, at least one of the steps of said method is executed by a first processing unit, and at least one other step of said method is executed by a second processing unit that is different from said first processing unit. The skilled person will appreciate that this corresponds to a form of the distributed operation described hereinabove in relation to the system embodiment according to the present invention.

In an embodiment, said virtual scene is a three-dimensional (3D) scene; said gaze distance origin corresponds to a virtual camera position of a virtual camera of said virtual scene; and said distance is determined by calculating a distance between said virtual object and said gaze distance origin.

In another embodiment, said distance is calculated by extending a gaze ray into said virtual scene from said gaze distance origin through said gaze coordinates and finding, within a view frustum of said virtual camera, a smallest distance of a plurality of intersections of said gaze ray with said virtual object and said gaze distance origin.

In yet another embodiment, said gazed virtual object is identified by selecting the virtual object of said virtual objects that has a minimum distance.

According to another aspect of the invention, there is provided a gaze distance determination module configured to determine a distance between a virtual object and a gaze distance origin determined based on gaze information comprising gaze coordinates representing a position at which a user is looking on a display displaying a virtual scene representation comprising virtual object representations of a number of virtual objects. The gaze distance determination module is preferably implemented as a static library or as an interface implementation by a virtual object. The skilled person will understand that such a gaze distance determination module is suitable for the effects and advantages described hereinabove for such modules in relation to the described system embodiments.

According to another aspect of the invention, there is provided a virtual object modification module configured to receive from a gaze translucency algorithm module a number of modification commands for one or more virtual objects, based on a number of identified gazed virtual objects; and to modify said one or more objects based on said number of modification commands. The virtual object modification module is preferably implemented as a static library or as an interface implementation by a virtual object.
The skilled person will understand that such a gaze distance determination module is suitable for the effects and advantages described hereinabove for such modules in relation to the described system embodiments.

According to yet another aspect of the invention, there is provided a computer program comprising computer-executable instructions configured to perform, when executed, the steps of any one of the methods described hereinabove.

The skilled person will appreciate that the technical features and advantages of the hereinabove described system embodiments are, *mutatis mutandis,* also applicable to the computer program embodiments.

### Brief Description of the Figures

Some system embodiments in accordance with the present invention are now described, by way of example only, and with reference to the accompanying drawings, in which:
Figures 1A-B illustrate architecture diagrams of a system embodiment according to the present invention;
Figure 2 illustrates a set-up for a 3D virtual scene of a system embodiment according to the present invention;
Figure 3 illustrates a distributed set-up for a system embodiment according to the present invention;
Figure 4 illustrates a set-up for a 2D virtual scene of a system embodiment according to the present invention;
Figure 5 illustrates another set-up for an augmented reality use setting for a system embodiment according to the present invention;
Figure 6 illustrates another architecture diagram of a system embodiment according to the present invention; and
Figure 7 illustrates an information flow diagram for a system embodiment according to the present invention.

In the figures, like or similar elements have been numbered equally or analogously.

### Description of Embodiments

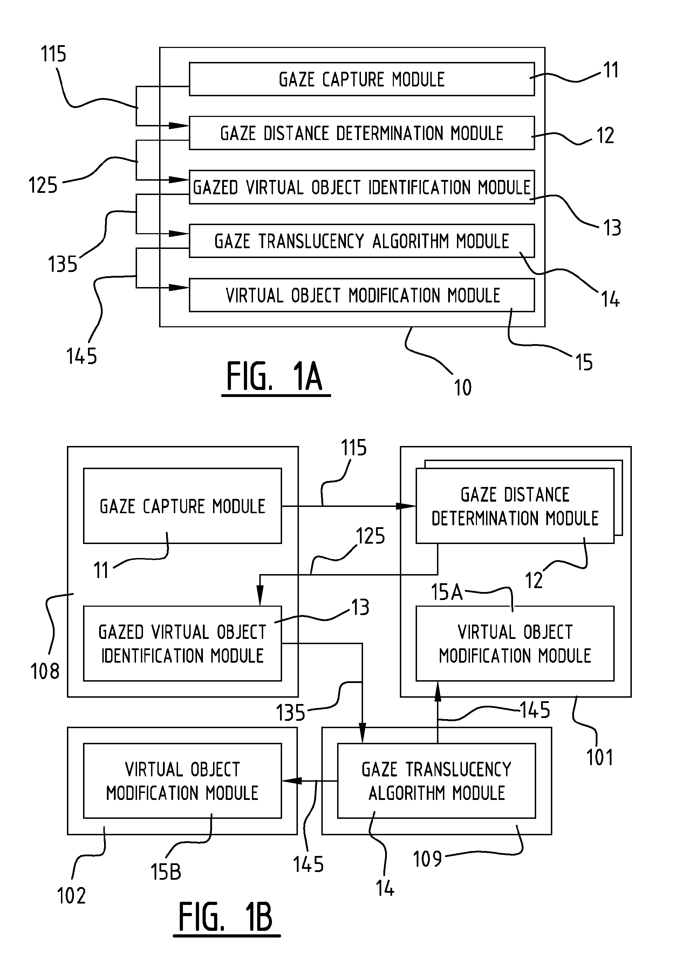

Figure 1A illustrates an architecture diagram of a system embodiment according to the present invention. The system 10 comprises a gaze capture module 11, a gaze distance determination module 12, a gazed virtual object identification module 13, a gaze translucency algorithm module 14 and a virtual object modification module 15. The gaze capture module 11 is configured to capture 115 a user's gaze information comprising gaze coordinates, said gaze coordinates representing a position on a display at which said user is looking or gazing (not shown). The gaze distance determination module 12 is configured to determine 125 a distance (or 'gaze distance') between a virtual object and a gaze distance origin, using said gaze information 115. The gazed virtual object identification module 13 is configured to identify 135 a gazed virtual object of a number of virtual objects, based on the determined distance (or distances) 125. The gaze translucency algorithm module is configured to assign to one or more of said virtual objects a modification command, based on said identified gazed virtual objects. The virtual object modification module 15 is configured to modify one or more virtual objects of said number of virtual objects, based on said modification command 145. In this manner, the system can implement gaze translucency, since information about what virtual objects users are looking at (*e.g.* the gazed virtual object 135) can be used to modify for instance one or more display properties of said virtual objects. This modification can for instance be performed by a virtual object itself (*e.g.* by applying a shader), rather than on its rendering representation on the display (in other words: its pixel representation on said display). The skilled person will moreover understand that the gaze information 115, the determined distance(s) 125, the identified virtual object(s) 135, and the modification command(s) 145 may be implemented as a (local) system property, or as events, or as parameters to function calls. Moreover, the skilled person will understand that a network module (not shown) may be used to transmit and/or receive any of the data connections that are shown, thereby facilitating networked and distributed operation.

Figure 1B illustrates another architecture diagram of a system embodiment according to the present invention, in an exemplary distributed form. A gaze capture module 11 and gazed virtual object identification module 13 are shown comprised by a first entity 108, for instance a first terminal. A plurality of gaze distance determination modules 12 (with parallel behaviour) and a virtual object modification module 15A are shown comprised by a second entity 101, and may for instance be implemented as a static library. The skilled person will understand that this second entity need not be the same entity for the gaze distance determination modules 12 and the virtual object modification module 15A, but that these modules may be comprised by separate entities (shared libraries). Also, the skilled person will understand that these modules may be otherwise implemented, for instance as interface implementations by one or more virtual object (or rather program code instances representing virtual objects). A gaze translucency algorithm module 14 is shown comprised by a third entity, for instance a central server 109. Further, another virtual object modification module 15B is shown comprised by a fourth entity 102. The skilled person will appreciate that the interrelationships of these modules are analogous to those described above for figure 1A. Moreover, the skilled person will appreciate that the arrows shown to cross from one entity to another may in practice be implemented as communications between the separate (distributed) entities, via a network, using various network modules configured to transmit and receive information to each other.

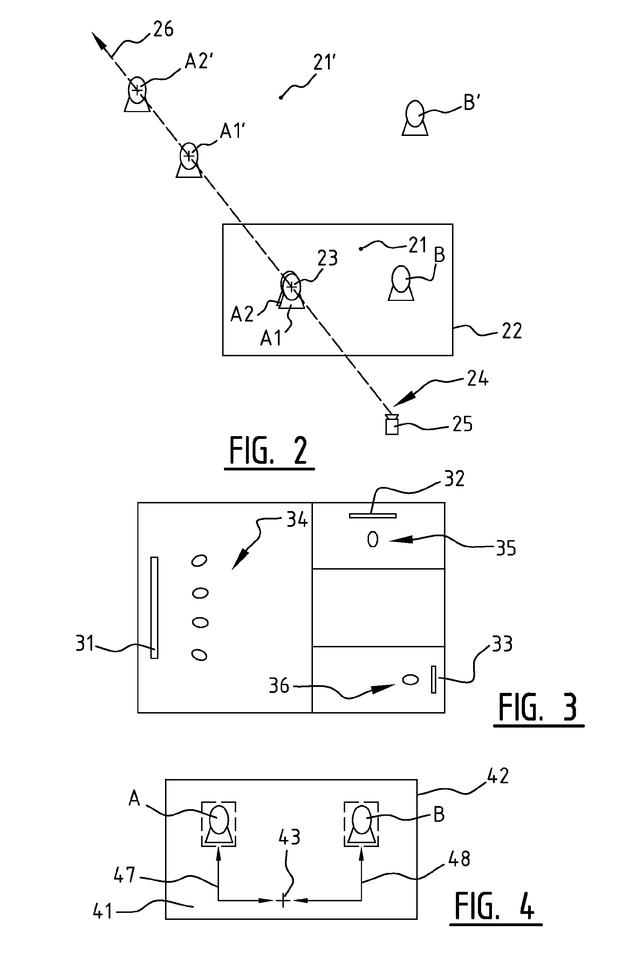

Figure 2 illustrates a set-up for a 3D virtual scene of a system embodiment according to the present invention. The figure shows a virtual camera 25, a display 22 displaying a virtual scene representation 21, and said virtual scene representation's underlying virtual scene 21' (shown as a perspective continuation from a virtual camera 25). The virtual scene representation 21 is in this case a 2D projection of a 3D virtual scene 21' that can be managed by a 3D engine (not shown), but the skilled person will understand that the virtual scene representation 21 can be referred to as a '3D scene', in view of its nature. The virtual scene representation 21 comprises a number of virtual object representations A1, A2 and B. Correspondingly, the underlying virtual scene 21' comprises virtual objects A1', A2' and B'. The skilled person will appreciate that due to the position and orientation of the virtual camera 25, the two separate virtual objects A1' and A2' are projected largely on the same surface area of display 22, as virtual object representations A1 and A2. For this reason, it is not immediately evident which of both virtual objects A1' and A2' a user (not shown) is gazing at. The user's gaze is taken to be at a position 23 on said display 22. A gaze capture module 11 can be configured to capture gaze information comprising gaze coordinates representing said position 23. For ease of illustration reference, the gaze coordinates (which may for instance be display position coordinates, or any other type of coordinates that can unambiguously represent which position on a display a user is gazing at) are here taken to coincide with the display position 23, i.e. the gaze coordinates are also indicated on the figure as reference number 23. In this embodiment, each of the virtual objects A1', A2' and B' implements a gaze distance determination module 12. Each such gaze distance determination module 12 is configured to determine a distance along a ray gaze 26, which is represented in this figure as a vector from a gaze distance origin 24, extending through the gaze coordinates 23, and 'into' the virtual scene 21' (which is taken to mean that the vector can mathematically be considered to extend into the space of the virtual scene 21'). The ray gaze 26 thereby represents the user's gaze. The gaze distance origin 24 is here taken to coincide with the position (and orientation) of the virtual camera 25. The skilled person will understand that a gaze distance origin 24 could also sensibly be defined otherwise, in order to allow determining a distance between a virtual object and some origin that is relevant to a gazing user. Since each such gaze distance determination module 12 is configured to determine a distance between its corresponding virtual object and said gaze distance origin 24, the skilled person will understand that the thusly determined distances represent 'how close' each of said virtual objects A1', A2' and B' is to the gaze distance origin 24, and therefore, which of said virtual objects A1', A2' and B' is being gazed at by the user. The skilled person will understand that this approach allows to find that virtual object B' (or equally, its virtual object representation B) is not being gazed at by the user (elegantly, its distance along the gaze ray 26 could be considered to be essentially infinite), and that virtual object A1' (or equally, A1) is closer than (*i.e.* more in front of) virtual object A2' (or equally, A2). This allows a gazed virtual object identification module 13 to identify a gazed virtual object - in this case, virtual object A1' (or equally, A1). The skilled person will understand that virtual objects outside of said virtual camera's view may be culled for efficiency.

Figure 3 illustrates a distributed set-up for a system embodiment according to the present invention. The figure shows a first display 31, a second display 32 and a third display 33. These displays are displaying virtual scene representations to a plurality of users, respectively users 34, user 35 and user 36. The skilled person will appreciate that the users are located in separate locations, and that the system operates in a distributed manner. Moreover, the skilled person will understand that to operate for multiple users 34, display 31 may be a multi-view display.

Figure 4 illustrates a set-up for a 2D virtual scene of a system embodiment according to the present invention. The figure shows a display 42 displaying a virtual scene representation 41 comprising virtual object representations A and B. The virtual scene underlying virtual scene representation 41 is a 2D virtual scene, in that its virtual objects are two-dimensional and lie in a plane (the plane of the display 42). Therefore, the skilled person will appreciate that a simple mapping is possible between the virtual scene and its representation, or likewise between the virtual objects and their representations. The figure also shows a position 43 on the display 42, which, as above for figure 1, can be defined to coincide with gaze coordinates, which can therefore also be denoted as gaze coordinates 43. In a 2D virtual scene, moreover, it will be appreciated that the gaze coordinates 43 generally also constitute a gaze distance origin for purposes of distance determination, so that determining a distance to said gaze distance origin corresponds with determining a distance to said gaze coordinates 43. The skilled person will understand that the system embodiment according to the present invention is also applicable to a 2D virtual scene, and can be simplified in that the distances 47 and 48 between the respective virtual objects A and B and the gaze coordinates 43 can be determined as 2D distances. The skilled person will appreciate that any of many 2D distance calculation approaches can be used for calculating such 2D distances. The figure shows that a rectilinear or Manhattan distance calculation is used, but a Euclidean distance calculation could also be used. In this figure, the distances 47 and 48 are calculated up to bounding-boxes of the virtual object representations A and B, but the skilled person will understand that many approaches are possible, as is well known to the person skilled in the art

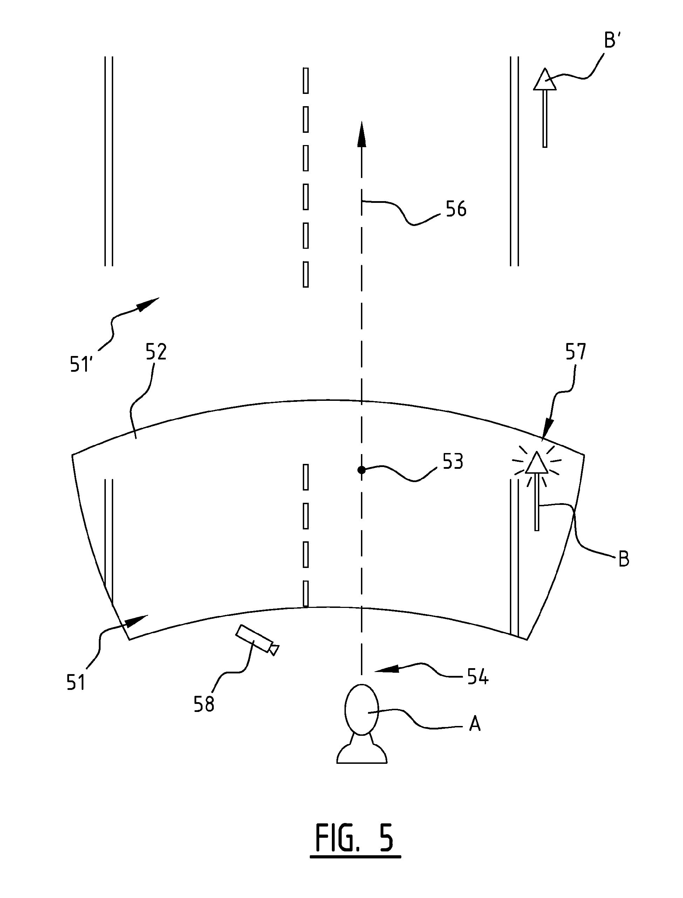

Figure 5 illustrates another set-up for an augmented reality use setting for a system embodiment according to the present invention. The figure shows a user or subject A driving a motorized car vehicle, of which a wind screen 52 is shown. Said wind screen 52 is a display, configured for displaying to said user A a virtual scene representation 51 comprising a number of virtual object representations for virtual objects (of a virtual scene) corresponding with physical objects in the real-world traffic environment 51' of said user A, thereby providing a virtually augmented reality. Said user A is shown gazing 56 at some indeterminate point in his traffic environment. In this embodiment, a real-world traffic sign B' exists at the side of the road. A traffic sign virtual object (not shown) has been created in said virtual scene, corresponding with said real-world traffic sign B'. The skilled person will understand that this traffic sign virtual object may be denoted an 'intelligent virtual sign', and that its representation may be shown as said virtual object representation B, as an augmented representation overlaid on the physical view of said real-world traffic sign B', or as an additional indicative representation on said wind screen display 52 (for example in an information display area or the like) or in further developed embodiments as an independent representation on said wind screen display 52 (irrespective of the presence of said real-world traffic sign B'). For some reason, said user A is not gazing at said traffic sign B'. The figure further shows a gaze capture module 58, symbolized as a camera, configured to capture gaze information of said user A, comprising gaze coordinates representing a position 53 on said wind screen display 52. One or more gaze distance determination modules (not shown) are provided to determine, for each virtual object (such as said intelligent virtual sign) a distance, based on said captured gaze information. Using this or these determined distances, a gazed virtual object identification module (not shown) can identify a gazed virtual object. In figure 5, no virtual object is gazed at specifically. A gaze translucency algorithm module (not shown) can use this information to assign to one or more virtual objects a modification command. Here, a virtual object modification module (not shown), configured to modify a virtual object, may receive said modification command and may modify the traffic sign virtual object (the intelligent virtual sign) in order to implement gaze translucency. This modification may serve to differentiate said virtual object (the intelligent virtual sign) to draw said user's A attention, for instance by causing said virtual object representation B to appear on said wind screen display 52, to have the user A gaze at it. In this manner, the conditions of mutual visibility (user can see the virtual sign, and *vice versa*), mutual awareness (the user is aware that the sign can see him, and *vice versa*) and mutual accountability (the user is aware that the sign is aware that the user can see it, and *vice versa*) are satisfied.

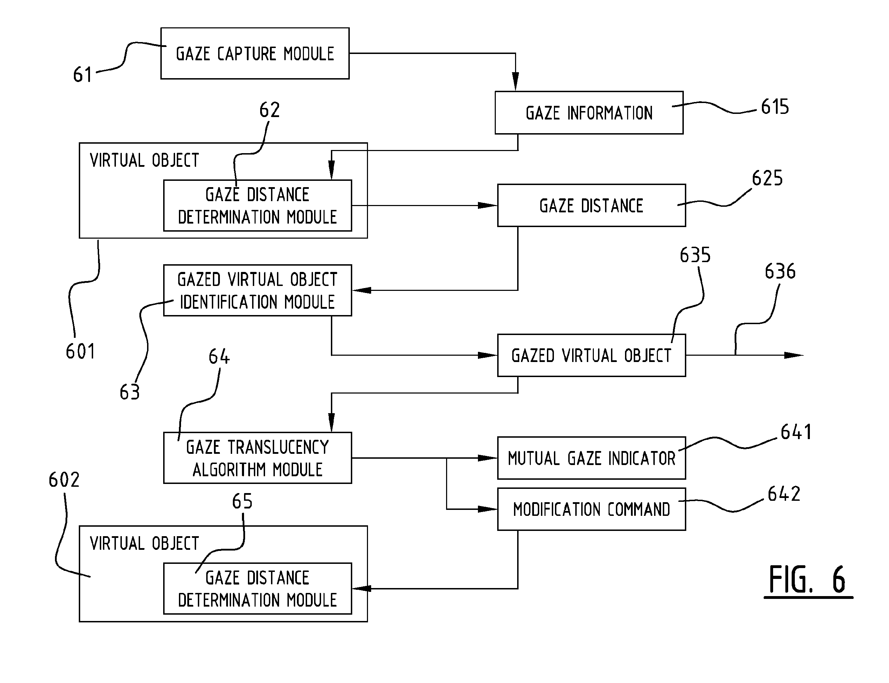

Figure 6 illustrates another architecture diagram of a system embodiment according to the present invention. This architecture diagram corresponds to the one shown in figure 1, with differences as explained hereinafter. The system 10 of figure 1 is not itself represented in figure 6, but is implicit. The gaze distance determination module 62 is shown as an implementation belonging to virtual object 601. The virtual object modification module 65 is shown as a module implemented by a virtual object 602. The virtual object 602 may or may not be the same virtual object as virtual object 601. The arrows 115, 125 and 135 of figure 1 have been substantiated in figure 6 as gaze information 615, a gaze distance 625 and a gazed virtual object 635 respectively. Figure 6 also features an arrow 636 representing transmitting information pertaining to the gazed virtual object 635 via a network (itself not shown), *e.g.* to be provided to interested parties. The gaze translucency algorithm module 64 is shown to output two data outputs, *viz.* a mutual gaze indicator 641 and a modification command 642. The mutual gaze indicator 641 could be used in the context of a system for implementing gaze translucency to indicate that a 'mutual gaze' is happening, *i.e.* that a gazed virtual object is gazing back at the user (*e.g.* a conference participant to whom the user is looking is looking back at the user). The modification command 642 is used by the virtual object modification module 65 to modify in some way its corresponding virtual object 602, *e.g.* by applying said modification command 642 to said virtual object 602. The skilled person will understand that the modules comprised by the system could for example be implemented as dynamic libraries, and the modules that implement interfaces (comprised by the system or not) and that are themselves comprised by the virtual objects as static libraries. Moreover, the skilled person will understand that the gaze information 615, the gaze distance 625 and the gaze translucency filter 642 could for example be implemented as local system properties, the gazed virtual object 635 as a global system property and the mutual gaze indicator 641 as an event. Nevertheless, the skilled person will appreciate that other implementations of these features are also possible.

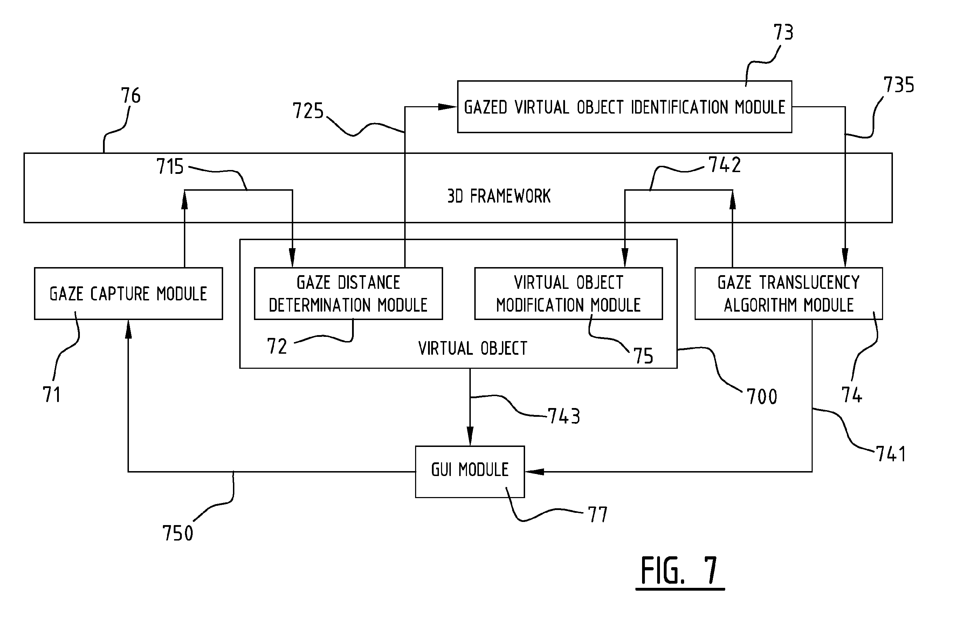

Figure 7 illustrates an information flow diagram for a system embodiment according to the present invention. The figure shows a 3D framework 76 which is suitable for representing virtual scenes. The figure further shows a gaze capture module 71, a gazed virtual object identification module 73 and a gaze translucency algorithm module 74 as in figure 6. Figure 7 further shows a gaze distance determination module 72 and a virtual object modification module 75, both shown as implemented modules belonging to a virtual object 700. The figure further shows a GUI (Graphical User Interface) Module 77, suitable to represent virtual objects on a display. The gaze capture module 71 writes gaze information 715 as a local system property to the 3D framework 76, from which they are read by the gaze distance determination module 72. This module writes the determines distance or distances 725 as a local system property to the 3D framework, from which it is (or they are) read by the gazed virtual object identification module 73. This module writes the gazed virtual object 735 as a global system property to the 3D framework 76 or transmits it across a network (not shown), from which it is read or received by the gaze translucency algorithm module 74. This module raises a mutual gaze indicator event 741 that can be caught and dealt with by the GUI module 77, for instance by activating a visual indication of a mutual gaze occurring. The gaze translucency algorithm module 74 also writes a gaze translucency filter 742 as a local system property to the 3D framework to be used by the virtual object modification module 75 (comprised by the virtual object 700), which uses said filter to modify the virtual object. This modification can take the form of applying one or more filters on the virtual object in order to differentiate it in depending on the gaze translucency usage setting. The virtual object 700 can provide 743 itself or a representation of itself to the GUI module 77 to be represented on the display. Finally, the GUI module 77 can request 750 the gaze capture module 71 to capture a user's gaze.

Although embodiments of system have been described hereinabove as separate embodiments, this is done for clarity purposes only, and it should be noted that features described only in connection with some embodiments may be applied in other embodiments according to the present invention to obtain the same technical effects and advantages, and vice versa.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

The functions of the various elements shown in the figures, including any functional blocks labelled as "processors", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the figures. are conceptual only. Their function may be carried out through the operation of program logic, through dedicated logic, through the interaction of program control and dedicated logic, or even manually, the particular technique being selectable by the implementer as more specifically understood from the context.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

## Claims

1. A system for implementing gaze translucency on a display configured for displaying to a user a virtual scene representation of a virtual scene, said virtual scene representation comprising a number of virtual object representations of virtual objects; said system comprising:
- a gaze capture module configured to capture gaze information of said user, said gaze information comprising gaze coordinates representing a position on said display at which said user is looking;
- a gaze distance determination module configured to determine a distance between a virtual object of said virtual objects and a gaze distance origin, based on said captured gaze information;
- a gazed virtual object identification module configured to identify, for said user, a gazed virtual object of said virtual objects, based on said determined distance;
- a gaze translucency algorithm module configured to assign a modification command to one or more of said virtual objects, based on said identified gazed virtual object; and
- a virtual object modification module configured to modify said one or more virtual objects based on their assigned modification command.

2. The system of claim 1, wherein said virtual scene is a three-dimensional (3D) scene; wherein said gaze distance origin corresponds to a virtual camera position of a virtual camera of said virtual scene; and wherein said gaze distance determination module is configured to determine said distance by calculating a distance between said virtual object and said gaze distance origin.

3. The system of claim 2, wherein said gaze distance determination module is configured to calculate said distance by extending a gaze ray into said virtual scene from said gaze distance origin through said gaze coordinates and finding, within a view frustum of said virtual camera, a smallest distance of a plurality of intersections of said gaze ray with said virtual object and said gaze distance origin.

4. The system of any of the previous claims, wherein said gazed virtual object identification module is configured to identify said gazed virtual object by selecting the virtual object of said virtual objects that has a minimum distance.

5. The system of any of the previous claims, wherein said gaze distance determination module is configured to determine said distance taking into account at least one bounding box of said virtual object.

6. The system of any of the claims 2-5, wherein said system further comprises head tracking means configured for dynamically determining said virtual camera position by capturing head tracking information of said user.

7. The system of any of the claims 2-5, wherein said virtual camera position is located at a pre-determined distance away from a pre-determined position of the display.

8. A method for implementing gaze translucency on a display configured for displaying to a user a virtual scene representation of a virtual scene, said virtual scene comprising a number of virtual object representations of virtual objects; said method comprising:
- capturing gaze information of said user, said gaze information comprising gaze coordinates representing a position on said display at which said user is looking;
- determining a distance between a virtual object of said virtual objects and a gaze distance origin, based on said captured gaze information;
- identifying, for said user, a gazed virtual object of said virtual objects, based on said determined distance;
- assigning a modification command to one or more of said virtual objects, based on said identified gazed virtual objects; and
- modifying said one or more virtual objects, based on their assigned modification command.

9. The method of claim 8, wherein at least one of the steps of said method is executed by a first processing unit, and at least one other step of said method is executed by a second processing unit that is different from said first processing unit.

10. The method of claim 8 or 9, wherein said virtual scene is a three-dimensional (3D) scene; wherein said gaze distance origin corresponds to a virtual camera position of a virtual camera of said virtual scene; and wherein said distance is determined by calculating a distance between said virtual object and said gaze distance origin.

11. The method of any of the claims 8-10, wherein said distance is calculated by extending a gaze ray into said virtual scene from said gaze distance origin through said gaze coordinates and finding, within a view frustum of said virtual camera, a smallest distance of a plurality of intersections of said gaze ray with said virtual object and said gaze distance origin.

12. The method of any of the claims 8-11, wherein said gazed virtual object is identified by selecting the virtual object of said virtual objects that has a minimum distance.

13. A gaze distance determination module configured to determine a distance between a virtual object and a gaze distance origin determined based on gaze information comprising gaze coordinates representing a position at which a user is looking on a display displaying a virtual scene representation comprising virtual object representations of a number of virtual objects.

14. A virtual object modification module configured to receive from a gaze translucency algorithm module a number of modification commands for one or more virtual objects, based on a number of identified gazed virtual objects; and to modify said one or more objects based on said number of modification commands.

15. A computer program comprising computer-executable instructions configured to perform, when executed, the steps of any one of the methods of claims 8-12.
